# EUROPEAN PATENT SPECIFICATION

(11) **EP 0 792 676 B1**
(45) Date of publication and mention of the grant of the patent: **20.04.2005**
(21) Application number: 96118913.1
(22) Date of filing: 26.11.1996
(51) Int. Cl.: B01D 39/00, B01D 39/20, B29C 47/66, B29C 47/68, B29D 23/00

(54) **Thin-walled, extruded activated carbon filter**
Dünnwandiger,extrudierter Aktivkohlefilter
Filtre extrudé à paroi fine en charbon actif

(30) Priority: 26.02.1996 US 607294
(43) Date of publication of application: 03.09.1997
(73) Proprietor: KX Industries, L.P., Orange, CT 06477 (US)
(72) Inventor: Koslow, Evan E., Weston, Connecticut 06883 (US); Kendrick, Richard D., Stratford, Connecticut 06497 (US); Spilkin, Gordon, Stamford, Connecticut 06907 (US)
(74) Representative: Volpert, Marcus

(56) References cited:
- WO-A-92/17327
- GB-A- 1 083 353
- US-A- 5 225 081
- US-A- 5 331 037

## Description

This invention relates to a novel thin-walled, extruded activated carbon filter, especially filter tube for use in room temperature water purification processes for removal of sub-micron sized particulates.

Although U.S. Patent 5 189,092 disclosed extrusion of compositions comprising activated carbon particles and thermoplastic binder powder to produce filtration articles, the activated carbon filters produced in said patent were not capable of particulate removal of 99.5 % or more of particles of a size of 0.5 µm to 0.8 µm, nor was it considered possible to produce activated carbon tubes having a wall thickness of less than 0.5 inch (12.7 mm) and especially such tubes having a wall thickness of 0.3 inch (7.62 mm) or less.

Presently used in filtration systems, where particulate removal in the range of 99.5 % or more of particulates of a size of 0.5 µm to 0.8 µm, are ceramic candle filters. Such ceramic filters are primarily designed for high temperature applications. However, due to the unavailability of suitable lower cost filters which would still provide the aforesaid degree of sub-micron particulate removal, such ceramic filters have also been employed for filtration or purification processes even when high temperatures are not required, such as at room temperature processes for purification of water. Such use of ceramic filters, when their high temperature properties are not required, results in a greatly increased filtration or purification cost due to the costly nature of such ceramic filters.

From WO 92/17327 and US-A-5 331 037 a carbon filter is known having a substantially uniform mixture comprising about 80 % to about 88.5 % by weight activated carbon particles and about 12.5 % to about 20 % by weight binder particles having diameters between about 0.1 and about 250 µm, said mixture further comprising about 65 % by weight 20 x 50 mesh activated carbon particles and about 20 % by weight 80 x 325 mesh activated carbon particles and about 15 % by weight polyethylene binder particles.

From US-A-5 225 081 a substantially uniform mixture is known comprising about 2 to about 25 % by weight of a thermoplastic binder and about 40 to about 75 % by weight of activated carbon. A filter system comprises said uniform mixture.

Although activated carbon filters have been known and used in water purification processes, it has not heretofore been possible to achieve the aforesaid level of particulate removal employing known activated carbon filters.

It is therefore the object underlying the invention that a highly effective thin-walled activated carbon filter, especially filter tube, be available for use in low temperature filtration and purification processes to replace the unduly expensive ceramic filter units now employed to obtain 99.5 % or more removal of particulates of a size of 0.5 µm to 0.8 µm from water or other liquids at room temperature.

This object is solved by an extruded, thin-walled activated carbon filter, expecially filter tube comprising the features of claim 1.

By thin-walled filter tube of this invention it is meant that the activated carbon filter tube has a wall thickness of 0.5 inch (12.7 mm) or less, more preferably 0.3 inch (7.62 mm) or less.

A thin-walled activated carbon filter can be extruded from said composition by the continuous extrusion process disclosed according to U.S. Patent 5,189,092, and will have a density sufficient to remove 99.5 % of particles of a size of 3 microns or larger, preferably sufficient to remove 99.5 % of particles of a size of about 0.5 µm to 0.8 µm.

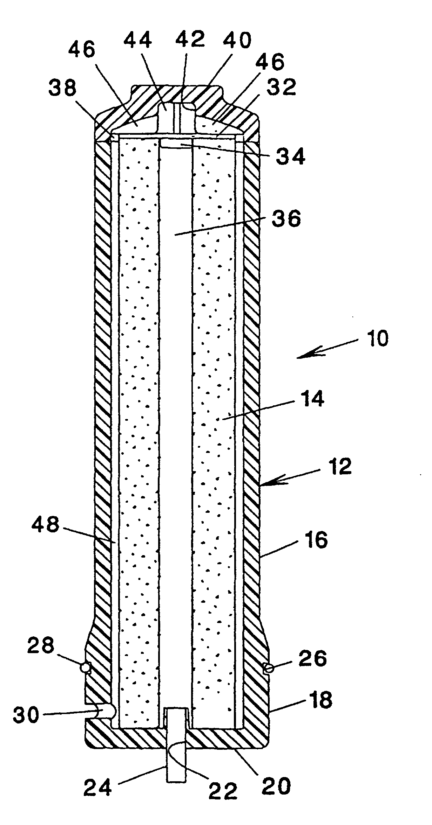

The Figure of the accompanied drawing shows an example of an activated carbon filter of this invention in a cross-sectional view.

It has been discovered that with the aforedescribed homogenous mixture of the two different sized activated carbon particles, i.e. from about 75 % to about 85 % by weight of about 18 % to 50 % by weight of -325 mesh activated carbon particles and about 50 % to 82 % by weight -200 to +325 activated carbon particles, employed with about 15 % to about 25 % by weight of thermoplastic powder having an average particle size of from about 5 µm to about 25 µm, extrusion of such a thin-walled filter tube could be accomplished to provide a fiher element capable of removing 99.5 % or more of particles of a size of 0.5 µm to 0.8 µm.

Any suitable activated carbon particles of the stated sizes can be employed in producing the thin-walled filter tubes of this invention. Among those activated carbon particles suitable for use and available from Calgon Carbon Corporation is Type TOG-NDS activated carbon, which is understood to be acid washed, bituminous coal-based activated carbon particles.

Although from about 18 % to about 50 % by weight of -325 mesh activated carbon particles may be employed, it is preferred that the amount of said -325 mesh particles be about 28 % by weight of the activated carbon particles and that 72 % by weight of the activated carbon particles be the -200 to +325 mesh particles. Also, it is preferred that the amount of activated carbon particles comprise about 81 % by weight of the essentially homogeneous mixture and the binder powder comprise about 19 % by weight of said mixture.

The thermoplastic binder can be composed of nearly any thermoplastic material including, for example, polyolefins such as polyethylene, polypropylene, polybutene-1 and poly-4-methylpentene-1; polyvinyls such as polyvinyl chloride, polyvinyl fluoride and polyvinylidene chloride; polyvinyl esters such as polyvinyl acetate, polyvinyl propionate and polyvinyl pyrrolidone; polyvinyl ethers; polyvinyl sulfates; polyvinyl phosphates; polyvinyl amines; polyoxidiazoles; polytriazoles; polycarbodiimides; copolymers and block interpolymers such as ethylene-vinyl acetate copolymers; polysulfones; polycarbonates; polyethers such as polyethylene oxide, polymethylene oxide and polypropylene oxide; polyarylene oxides; polyesters, including polyarylates such as polyethylene terphthalate, nylons polyimides and variation on these and other polymers having substituted groups such as hydroxyl, halogen, lower alkyl groups, lower alkoxy groups, monocyclic aryl groups and the like, and other thermoplastic meltable solid materials. Preferred are polyethylene, poly(ethylene vinyl acetate) and nylons. Especially preferred as a binder is polyethylene, particularly grade SN 510 polyethylene from the USI Division of Quantum Chemical Corporation.

If desired, a small amount of the about 75 % to about 85 % by weight activated carbon particles in the essentially homogeneous mixture can be replaced with additional particulate or powdered additive materials to enhance the performance of the filter. For example, from about 6 % to 20 % by weight of zeolite can be added to increase adsorption of heavy metals, such as lead, from the water or other liquid to be filtered. An especially preferred zeolite that can be employed as such an additive is ATS titanium silicate zeolite with high specificity for adsorbing lead, which zeolite is available from Engelhard Corporation. As examples of other additives which may be employed in small amounts, generally in amounts of less than about 10 % by weight, there may be mentioned diatomaceous earth, ceramics, ion exchange resins and the like.

The components of the extrudable composition are to be mixed to an essentially homogeneous mixture before extrusion of the mixture into the desired thin-walled carbon tubes. After the components have been mixed to an essentially homogeneous mixture, the mixture can be extruded into the desired thin-walled carbon tubes by extrusion according to the process and with the apparatus described in U.S. Patent 5,189,092.

The extruded, thin-walled carbon tubes of this invention will generally have a density of from about 0.65 to about 0.75 g/cm³. For example, according to this invention it is possible to produce an activated carbon filter tube of an average density of 0.72 g/cm³ having a 2.0 inch (50.8 mm) O.D. and a 1.4 inch (35.56 mm) LD., i.e. a wall thickness of 0.3 inch (7.62 mm). The tube can be continuously extruded and cut to any desired length, such as for example, 10 inches long (254 mm).

In accordance with this invention such an extruded thin-walled activated carbon tube is cut to the desired length and then the tube is mounted or bonded to two suitable end caps or to one end cap and mounted in a suitable cartridge housing or some similar suitable configuration for filters.

Illustrated in the Figure is a typical thin-walled filter tube element of this invention mounted in a cartridge and suitable for use as a unit in purifying water to sub-micron particle size levels. It is to be recognized that the thin-walled filter tubes of this invention can be used in any suitable environment and that its description of being housed in the cartridge of the Figure is merely an exemplary and non-limiting embodiment.

The filtration unit 10 of the Figure comprises a cartridge 12 housing a thin-walled, extruded filter tube 14 of this invention. The cartridge 12 can be made of any suitable material, such as for example, metal or plastic, such as polypropylene or the like. The cartridge 12 comprises a substantially cylindrical hollow housing having sidewall 16, which at a first end 18, such as a lower end, can be slightly flared to fit into a suitable base for mounting the filter unit 10 to a source of water or liquid to be purified. The lower end 18 is closed by a base wall 20. The base 20 includes an axial passageway 22 to the interior of the hollow cartridge 12. A conduit or pipe 24 is mounted in said axial passageway 22 for permitting filtered, purified water or other liquid to exit from the interior of the hollow cartridge 12. If desired or necessary, the sidewall 16 can be provided with an exterior groove 26 with an O-ring 28 mounted therein for sealingly sealing the filtration unit 10 in a water or liquid supply source (not shown). A radial passageway 30 is provided in the sidewall for permitting water or other liquid to be filtered to enter into the interior of the hollow cartridge. A thin-walled, extruded, porous activated carbon filter tube 14 of this invention is provided with a capping disk 32 at one end to close said end of the filter tube. The disk 32 has a central protrusion 34 which extends into the hollow tubular passageway 36 of the filter tube 14 for purposes of alignment. The disk 32 is also provided with a peripheral rim 38 for aligning the filter tube 14 and closing off the end of said filter tube. The function of disk 32 is to prevent water or other liquid from passing axially into the hollow tubular axial passageway 36 of the filter tube 14.

At the second or upper end of the sidewall 16 the cartridge 12 is closed with an end cap 40 provided with a central recess 42 for receiving, holding and aligning capping disk 32 by engaging a raised central hub 44 on the disk. The disk 32 may be provided with a plurality of radial ribs 46 which can also assist in the alignment process.

The thin-walled filter tube 14, provided with capping disk 32 as its one end is inserted into cartridge 12 with the open end of the filter tube surrounding axially passageway 22 and exit conduit 24. Subsequently, the cartridge is closed by end cap 40 by inserting raised hub 44 on disk 32 into the central recess 42 of the end cap. The assembled filtration unit 10 can now be employed by installation into a system whereby water or other liquid to be purified enters cartridge 12 through radial passageway 30 and flows into the interior space 48 between the cartridge sidewall 16 and the thin-walled filter unit 14. Because the upper end of the tubular axial passageway 36 is blocked by capping disk 32, the water or liquid is forced to flow radially through the porous thin-walled filter tube and down the tubular axial passageway where it enters the conduit 24 at the bottom of the cartridge 12, flowing therethrough as water or other liquid purified to a sub-micron level.

The invention is further illustrated by the following example of the preparation and testing of a thin-walled activated carbon filter tube of this invention.

A substantially homogeneous mixture is prepared by mixing about 81 % by weight of type TOG-NDS acid washed, bituminous coalbased activated carbon particles with about 19 % by weight type SN 510 polyethylene powder having a particle size within the range of from 5 µm to 25 µm. The 81 % by weight activated carbon comprised about 28 % by weight of -325 mesh activated carbon particles and about 72 % by weight of -200 to +325 mesh activated carbon particles. The substantially homogeneous mixture was then extruded into a thin-walled hollow tube of 2" O.D. (50.8 mm) x 1.4" LD. (35.56) and having an average dry density of about 0.72 g/cm³ by the extrusion process and apparatus disclosed in the aforementioned U.S. Patent 5,189,092. The substantially homogeneous mixture was heated for about 5 minutes in the extruder heating zone maintained at a temperature of about 375 °F (190°C), and cooled for about 3 minutes in the extruder cooling zone maintained at a temperature of about 95°F (35°C) before being extruded as a thin-walled hollow tube. The thin-walled hollow tube was then cut into suitable lengths of about 10 inches (254 mm) for use in testing as a filter for removing sub-micron sized particles.

Using water contaminated with PTI fine test dust powder, the filter tubes of this invention were tested for sub-micron sized particulate removal. Flowing such contaminated water at 0.11 m³/h (0.5 gal/min.) through the above produced thin-walled filter tubes mounted in an appropriate cartridge and having a pressure drop across the filter of about 1 N/mm² (14 psi_{d}) resulted in the exiting purified water having a 99.9 % reduction of contaminating dust particles of a size of from 0.5 µm to 0.8 µm as measured using a laser in-line particle counting technique.

When a similar type thin-walled filter tube is produced having an average dry density of 0.67 g/cm³ and tested with said dust contaminated water flowing at 0.11 m³/h (0.5 gal/min.) with a pressure drop across the filter of 0.5 N/mm² (7.5 psi_{d}), 99.8 % of particles in the size range of from 0.8 µm to 1 µm were removed as measured by the laser in-line particle counting technique.

The extruded thin-walled activated carbon filter tubes of this invention are characterized by the fact that the surface of the extruded tubes are extremely hard and smooth and as a result particulates filtered out on the outer surface of the extruded tubes are readily removed which permit repeated re-use of the filter tubes after cleaning. Additionally, the hard/smooth surface of the extruded thin-walled activated carbon filter tubes of this invention prevents release of carbon particles from the interior surface of the tubular filters and into the purified water or other liquid.

## Claims

1. Extruded, thin-walled activated carbon filter made from a composition comprising an essentially homogeneous admixture of
(a) from 75 % to 85 % by weight activated carbon particles comprising
(aa) from 18 % to 50 % by weight of said particles passing through a 325 mesh screen, and
(ab) from 50 % to 82 % by weight of said particles passing through a 200 mesh screen but being retained on a 325 mesh screen, and
(b) from 15 % to 25 % by weight of a thermoplastic binder powder having an average particle size of from 5 µm to 25 µm, the carbon filter having an average dry density of from 0.65 to 0.75 g/cm³.

2. Carbon filter according to claim 1, **characterized by** a filter tube having a wall thickness of 12,7 mm (0.5 inch) or less, preferably 7,62 mm (0.3 inch) or less.

3. Carbon filter according to claim 1 or 2, **characterized in that** the activated carbon particles comprise about 81 %, and the thermoplastic binder comprises about 19 % by weight of the essentially homogeneous mixture.

4. Carbon filter according to one of the foregoing claims, **characterized in that** the activated carbon particles comprise about 28 % by weight of activated carbon particles passing through a 325 mesh screen and about 72 % by weight of activated carbon particles passing through a 200 mesh screen but being retained on a 325 mesh screen.

5. Carbon filter according to one of the foregoing claims, **characterized in that** the thermoplastic binder comprises a polyethylene powder.

6. Carbon filter according to one of the foregoing claims, **characterized in that** the activated carbon particles are acid washed, bituminous coal-based activated carbon particles.

7. Process for purifying water or other filterable liquid comprising filtering the water or other filterable liquid through an extruded, thin-walled activated carbon filter according to one of the foregoing claims.

## Patentansprüche

1. Dünnwandiger, extrudierter Aktivkohlefilter, hergestellt aus einer Masse, die im wesentlichen ein homogenes Gemisch aus folgenden Bestandteilen bildet:
(a) 75 Gew.-% bis 85 Gew.-% aktivierte Kohlenstoffteilchen aus
(aa) 18 Gew.-% bis 50 Gew.-% Teilchen, die durch ein 325-maschiges Sieb hindurchgehen und
(ab) 50 Gew.-% bis 82 Gew.-% Teilchen, die durch ein 200-maschiges Sieb hindurchgehen, jedoch von einem 325-maschigen Sieb zurückgehalten werden, und femer bestehend aus
(b) 15 Gew.-% bis 25 Gew.-% eines thermoplastischen, pulverförmigen Bindemittels mit einer durchschnittlichen Teilchengröße von 5 µm bis 25 µm,
wobei der Kohlefilter eine durchschnittliche Trockendichte von 0,65 bis 0,75 g/cm³ aufweist.

2. Aktivkohlefilter nach Anspruch 1, **gekennzeichnet durch** ein Filterrohr mit einer Wanddicke von 12,7 mm (0,5 inch) oder weniger, vorzugsweise 7,62 mm (0,3 inch) oder weniger.

3. Aktivkohlefilter nach Anspruch 1 oder 2, **dadurch gekennzeichnet, dass** die Aktivkohleteilchen etwa 81 Gew.-% und der thermoplastische Binder etwa 19 Gew.-% der im wesentlichen homogenen Mischung ausmachen.

4. Aktivkohlefilter nach einem der vorangegangenen Ansprüche, **dadurch gekennzeichnet, dass** die Aktivkohleteilchen aus etwa 28 Gew.-% Aktivkohleteilchen, die durch ein 325-maschiges Sieb hindurchgehen, und etwa 72 Gew.-% Aktivkohleteilchen bestehen, die durch ein 200-maschiges Sieb hindurchgehen, jedoch von einem 325-maschigen Sieb zurückgehalten werden.

5. Aktivkohlefilter nach einem der vorangegangenen Ansprüche, **dadurch gekennzeichnet, dass** der thermoplastische Binder ein Polyethylenpulver ist.

6. Aktivkohlefilter nach einem der vorangegangenen Ansprüche, **dadurch gekennzeichnet, dass** die Aktivkohleteilchen von bituminösen Aktivkohleteilchen auf Kohlebasis gebildet werden, die in einer Säure gewaschen sind.

7. Verfahren zur Reinigung von Wasser oder einer anderen filterbaren Flüssigkeit, **gekennzeichnet durch** Filtrieren des Wassers oder der anderen filterbaren Flüssigkeit mit Hilfe eines extrudierten, dünnwandigen Aktivkohlefilters gemäß einem der vorhergehenden Ansprüche.

## Revendications

1. Filtre extrudé au charbon actif à paroi minces réalisé à partir d'une composition comprenant un mélange essentiellement homogène de :
(a) 75 % à 85 % en masse de particules de charbon actif, comprenant
(aa) 18 % à 50 % en masse desdites particules qui passent par un tamis de 325 mesh, et
(ab) 50 % à 82 % en masse desdites particules qui passent à travers un tamis de 200 mesh mais sont retenues sur un tamis de 325 mesh, et
(b) 15 % à 25 % en masse d'une poudre de liant thermoplastique ayant une taille moyenne de particules comprise entre 5 µm et 25 µm, le filtre au charbon ayant une densité moyenne à sec comprise entre 0,65 et 0,75 g/cm³.

2. Filtre à charbon selon la revendication 1, **caractérisé par** un tube de filtre qui présente une épaisseur de paroi de 12,7 mm (0,5 pouce) ou moins, de préférence de 7,62 mm (0,3 pouce) ou moins.

3. Filtre à charbon selon la revendication 1 ou 2, **caractérisé en ce que** les particules de charbon actif forment environ 81 %, et **en ce que** le liant thermoplastique forme environ 19 % en masse du mélange essentiellement homogène.

4. Filtre à charbon selon l'une des revendications précédentes, **caractérisé en ce que** les particules de charbon actif comprennent environ 28 % en masse des particules de charbon actif passant par un tamis de 325 mesh, et environ 72 % en masse des particules de charbon actif passant par un tamis de 200 mesh mais retenues par un tamis de 325 mesh.

5. Filtre à charbon selon l'une des revendications précédentes, **caractérisé en ce que** le liant thermoplastique comporte une poudre de polyéthylène.

6. Filtre à charbon selon l'une des revendications précédentes, **caractérisé en ce que** les particules de charbon actif sont des particules de charbon actif lavées à l'acide, à base de charbon bitumeux.

7. Procédé de purification d'eau ou d'un autre liquide filtrable comprenant la filtration de l'eau ou de l'autre liquide filtrable par un filtre extrudé au charbon actif à paroi mince selon l'une des revendications précédentes.
